# EUROPÄISCHE PATENTSCHRIFT

(11) **EP 2 508 377 B1**
(45) Veröffentlichungstag und Bekanntmachung des Hinweises auf die Patenterteilung: **28.11.2018**
(21) Anmeldenummer: 12161396.2
(22) Anmeldetag: 27.03.2012
(51) Int. Cl.: B60J 10/16, B60J 10/70

(54) **SCHEIBENEINHEIT MIT RAHMENPROFIL FÜR KFZ-FENSTER**
GLAZING UNIT WITH SEALING STRIP FOR MOTOR VEHICLES WINDOWS
UNITÉ DE VITRE AVEC UN JOINT D'ÉTANCHÉITÉ POUR FENÊTRE DE VÉHICULES AUTOMOBILES

(30) Priorität: 06.04.2011 DE 202011000804 U
(43) Veröffentlichungstag der Anmeldung: 10.10.2012
(73) Patentinhaber: Richard Fritz Holding GmbH, 74354 Besigheim (DE)
(72) Erfinder: Majer, Joachim, 74172 Neckarsulm (DE)
(74) Vertreter: Mammel und Maser

(56) Entgegenhaltungen:
- EP-A1- 1 732 776
- DE-A1- 19 927 473
- DE-T2- 69 405 029
- US-A1- 2005 151 389

## Beschreibung

Die Erfindung betrifft eine Scheibeneinheit für Fenster an Kraftfahrzeugen, mit einer Scheibe, mit einem Rahmen, der ein Rahmenprofil aufweist und den Rand der Scheibe an wenigstens zwei umlaufenden Seiten umfasst, wobei der Rahmen an wenigstens zwei umlaufenden Seiten der Scheibe angreift oder die Scheibe ringförmig in sich geschlossen umgibt, und der Rahmen aus zwei Profilteilen mit einem Primärteil und einem Sekundärteil ausgebildet ist und das Primärteil als Hartkomponente ausgebildet ist, dessen Formfestigkeit größer als diejenige des als Weichkomponente ausgebildeten Sekundärteils ist.

Solche Scheibeneinheiten mit einer 2-Komponenten-Umspritzung sind seit langem bekannt. Zur Herstellung eines die Scheibe umlaufenden Rahmens wird im Randbereich der Scheibe auf einer Innenseite einer Stirnseite und einer Außenseite ein Primer oder ein Haftmittel aufgebracht, bevor ein Primärteil als Hartkomponente an den Randbereich der umlaufenden Seite der Scheibe angespritzt wird. Anschließend wird auf diese Hartkomponente ein Sekundärteil als Weichkomponente aufgespritzt, wobei dieses Sekundärteil nicht zur Anlage an der Scheibe kommt, jedoch das Primärteil teilweise umgibt. Dabei ist es insbesondere auf der Außenseite der Scheibe erforderlich, den Primer oder den Haftvermittler exakt aufzubringen, damit nach dem Anbringen der Umspritzung der Primer oder Haftvermittler aufgrund eines Überstandes nicht sichtbar ist. Beim Umspritzen taucht zumeist jedoch das Problem auf, dass aufgrund von Toleranzen ein Überstand des Primers gegeben ist. Dies stellt eine optische Beeinträchtigung dar und erfordert eine manuelle Nacharbeit, um den aufgebrachten Primer oder Haftvermittler wieder von der Außenseite der Scheibe zu entfernen.

Aus der WO 2005/092655 A1 ist eine Scheibeneinheit für ein Fenster an Kraftfahrzeugen bekannt, welche eine Scheibe mit einer ZweiKomponenten-Umspritzung umfasst. Eine Hartkomponente greift im Randbereich der Scheibe an einer Innenseite, einer Stirnseite und einer Außenseite der Scheibe an. Diese Hartkomponente ist von einer Weichkomponente umgeben, welche ebenfalls an der Außenseite der Scheibe angreift und die Hartkomponente umgibt.

Aus der EP 0857116 B1 ist eine Scheibeneinheit für Fenster von Kraftfahrzeugen und dergleichen bekannt, bei der eine Scheibe mit einem Rahmen aus Kunststoff versehen ist, welcher ein bestimmtes Querschnittsprofil hat. Diese Scheibeneinheit wird mit Hilfe ihres Rahmens in eine vorbestimmte Öffnung des Kraftfahrzeuges eingesetzt und darin befestigt. Der Rahmen wird aus zwei Profilteilen gebildet, von denen der primäre Profilteil den Randbereich der Glasscheibe auf drei Seiten formschlüssig umgibt. Der Rahmen wird durch Einspritzen eines Kunststoffes für den primären Profilteil um die Scheibe hergestellt. Anschließend wird auf das Primärteil ein sekundäres Profilteil mit weiteren Profilabschnitten aufgebracht, so dass eine 2-Komponenten-Umspritzung der Scheibe gegeben ist. Das Sekundärteil weist eine geringere Formfestigkeit ihres Werkstoffes als das Primärteil auf und ist ausreichend nachgiebig, um anschmiegsame Dichtungsleisten zu bilden. Diese Scheibenanordnung ist insbesondere deshalb entwickelt worden, um auf den im zuvor genannten Stand der Technik verwendeten Primer verzichten zu können. Dabei wurde mit dem weicheren Sekundärteil eine ausreichende Dichtwirkung erzeugt, ohne dass ein Primer zwischen Scheibe und Primärteil eingebracht werden muss. Diese Scheibenanordnung hat sich an damit ausgestatteten Fahrzeugen gut bewährt. Bei der Herstellung dieser Scheibeneinheit sind zur Gewährleistung der Dichtigkeit in verschiedenen Einsatzfällen des Fahrzeugs Dichtigkeitstests notwendig, welche zeitaufwändig und kostenintensiv sind. Hierbei handelt es sich um einen so genannten Kärcher-Test zur Prüfung der Spritzwasserdichtigkeit und einen Wassersäulen-Test zur Prüfung der Dichtigkeit einer stehenden Wassersäule auf der Außenseite der Scheibenanordnung.

Aufgabe der Erfindung ist es folglich, eine Scheibeneinheit zur Verfügung zu stellen, mit welcher die Dichtigkeit gewährleistet ist, jedoch bei der Herstellung auf aufwändige Tests verzichtet und dennoch ein Rahmen mit einem geringen Aufwand hergestellt werden kann.

Eine Lösung dieser Aufgabe wird mit einer Scheibeneinheit gemäß Anspruch 1 zur Verfügung gestellt. Bevorzugte Ausführungsformen sind in den Unteransprüchen offenbart.

Danach ist mit der Erfindung eine Scheibeneinheit gefunden worden, bei welcher das Primärteil nur an der Innenseite, oder nur an der Stirnseite, oder nur an der Innenseite und der Stirnseite an den Randbereich der Scheibe angespritzt ist und das Sekundärteil das Primärteil zumindest teilweise umgibt und auf der Außenseite der Scheibe unmittelbar an der Scheibe anliegt und mit einem Primer oder Haftvermittler an der Scheibe befestigt ist. Die erfindungsgemäße Scheibeneinheit weist zum einen den Vorteil auf, dass nur eine vollständige Benetzung des Randbereichs auf der Außenseite der Scheibe mit Primer oder Haftvermittler erforderlich ist, um eine dichte Anordnung zu erzielen. Es genügt, dass nur auf einer Außenseite der Scheibe im Randbereich ein Primer oder eine Haftvermittlerschicht aufgebracht wird, um das Sekundärteil zur Herstellung der Dichtigkeit mit der Scheibe zu verkleben. Dadurch kann auf die geforderten Tests, wie beispielsweise den Kärcher-Test oder den Wassersäulen-Test, verzichtet werden. Darüber hinaus ermöglicht diese Anordnung, dass die weiteren Bereiche des Primärteils und Sekundärteils, welche den Randbereich der Scheibe umgreifen, in der Ausgestaltung flexibel und an verschiedene Anforderungen angepasst werden können.

Eine vorteilhafte Ausführungsform der Erfindung wird dadurch bereitgestellt, dass das Sekundärteil das Primärteil auf der Innenseite der Scheibe zumindest teilweise umgibt. Obschon es für die Dichtigkeit ausreicht, dass das Sekundärteil an der Außenseite der Scheibe mit Primer oder Haftvermittler fest verbunden ist, weist diese Ausführungsform verbesserte Schalldämpfung von Fahrgeräuschen auf. Darüber hinaus kann dadurch erreicht werden, dass das elastischere Sekundärteil, welches zumindest teilweise das Primärteil umgibt, eine gewisse Kraft auf das Primärteil ausgeübt, wodurch das Primärteil zusätzlich an die Scheibe gedrückt wird und ein Primer oder Haftvermittler entbehrlich ist.

Des Weiteren ist bevorzugt vorgesehen, dass das Sekundärteil das Primärteil auf der Innenseite der Scheibe umgibt oder überdeckt, jedoch nicht zur Anlage auf der Innenseite der Scheibe kommt beziehungsweise zur Innenseite der Scheibe beabstandet angeordnet ist. Dabei ist bevorzugt vorgesehen, dass das Sekundärteil sich auf der Außenseite und der Innenseite der Scheibe bevorzugt im gleichem oder sehr ähnlichen Maße von einer Stirnseite der Scheibe bis zur Scheibenmitte erstreckt, so dass quasi zwei parallel zueinander verlaufende Schenkel ausgebildet sind und auf der Innenseite, sofern das Primärteil dort vorgesehen ist, das Primärteil sich gegenüber dem Sekundärteil zur Scheibenmitte hin hervorspringend angeformt ist. Bei dieser Ausgestaltung kann insbesondere eine zusätzliche Klammerwirkung oder Haltewirkung des Sekundärteils auf das Primärteil ausgeübt werden, unabhängig davon, ob dieses nur an der Innenseite, der Stirnseite oder teils an der Außenseite oder in einer beliebigen Kombination hiervon am Randbereich der Scheibe sich erstreckt und angeformt ist.

Eine alternative Ausführungsform der Erfindung sieht vor, dass das Sekundärteil auf der Innenseite der Scheibe das Primärteil überdeckt und unmittelbar an der Scheibe anliegt. In besonderen Fällen kann für eine gewünschte Optik diese Ausführungsform gewählt werden. Diese Ausführungsform kann auch dann von Vorteil sein, wenn das Primärteil mittels eines Primers auf der Innenseite der Scheibe befestigt ist und der Primerauftrag oder Haftvermittlerauftrag einen Überstand gegenüber dem Primärteil aufweist, so dass das anschließend sich darüber erstreckende Sekundärteil diesen Überstand abdeckt und auch auf der Innenseite kein Primer oder Haftvermittler sichtbar ist und eine entsprechende Optik aufweist.

Des Weiteren ist bevorzugt vorgesehen, dass das auf der Innenseite der Scheibe anliegende Sekundärteil zumindest teilweise mit einem Primer oder einem Haftvermittler an der Scheibe befestigt ist. Diese Anordnung wird insbesondere dann gewählt, wenn das Primärteil, welches durch das Sekundärteil vollständig eingeschlossen ist, nicht mittels eines Primers oder Haftvermittlers an dem Randbereich der Scheibe angebracht ist. Dies schließt jedoch nicht aus, dass in einigen Fällen auch das Primärteil über einen Primer oder Haftvermittler an der Scheibe befestigt ist.

Eine weitere bevorzugte Ausführungsform der Erfindung sieht vor, dass im Randbereich der Scheibe an einer Außenseite der Scheibe die Auftragsbreite des Primers oder Haftvermittlers im Verhältnis zu dem den Randbereich an der Außenseite überdeckenden Sekundärteil derart erfolgt, dass der Primer oder Haftvermittler eine Unterschneidung zum zur Scheibenmitte ragenden Randabschluss des Sekundärteils aufweist. Eine Unterschneidung liegt dann vor, wenn der Primer oder Haftvermittler nicht bis zum äußeren Randabschluss des Sekundärteils reicht und der zur Scheibenmitte weisende Randabschluss des Sekundärteils somit frei liegt. Dadurch ist der Primer von außen optisch nicht wahrnehmbar, so dass die Scheibeneinheit ausschließlich von der optischen Wirkung des Sekundärteils geprägt ist. Die Auftragung dieses schmalen Streifens an Primer oder Haftvermittler kann vorzugsweise bei der üblichen Aktivierungstemperatur für Primer von 80 °C bis 120 °C durchgeführt werden. Aufgrund der erforderlichen geringen Menge wird mit dem erhitzten Primer oder Haftvermittler auf die Scheibe jedoch nur wenig Wärmeenergie übertragen. Die Scheibe wird somit lediglich bis zu einer geringen Tiefe und nur schwach aufgeheizt, so dass für die erfindungsgemäße Scheibenanordnung auch Verbundglasscheiben einsetzbar sind, deren Verbundfolie bei zu großer Temperatur beschädigt werden würde.

Eine weitere bevorzugte Ausführungsform weist im Randbereich der Scheibe an einer Innenseite der Scheibe eine Auftragsbreite des Primers oder Haftvermittlers auf, welche im Verhältnis zu dem den Randbereich an der Innenseite überdeckenden Primärteil derart erfolgt, dass der Primer oder Haftvermittler deckungsgleich oder mit einem Überstand zum Primärteil aufgetragen ist. Ein Überstand liegt dabei vor, wenn das Primärteil vollständig auf dem Primer oder Haftvermittler anliegt und dieser über den Rand des Primärteils hinausragt und/oder der Haftvermittler eine etwas größere Auftragsbreite aufweist, als für die Festlegung des Randes erforderlich wäre. Alternativ kann des Weiteren vorgesehen sein, dass das Sekundärteil das Primärteil auf der Innenseite überragt und an dem mit Überstand ausgebildeten Auftrag des Primers oder Haftvermittlers befestigt ist. In diesem Falle kann das Sekundärteil sowohl auf der Innenals auch auf der Außenseite der Scheibe mit Primer anhaften. Das durch das Sekundärteil eingeschlossene Primärteil kann lediglich an dem Randbereich der Scheibe anliegen oder durch einen Primer oder Haftvermittler befestigt sein. Das Material des Primers nimmt dabei im Bereich des Überstandes die Wärme bevorzugt auf, beispielsweise bei einer Heißluftanwendung, womit dieser sich leichter von der Scheibe löst. Die Wärme wird von diesem bereits gelösten Überstand darüber hinaus schnell in den Bereich zwischen der Scheibe und dem Sekundärteil geleitet, so dass dieser Bereich sich ebenfalls von der Scheibe lösen kann. Nachdem das Sekundärteil auf der Innenseite gelöst ist, können die weiteren Schritte vorgenommen werden, um die Außenseite des Sekundärteils von der Außenseite der Scheibe beziehungsweise das Primärteil von der Scheibe zu trennen. Dadurch kann ein erleichtertes Recyceln erfolgen.

Eine weitere bevorzugte Ausführungsform sieht vor, dass das Primärteil an der Innenseite, an der Stirnseite oder an der Außenseite der Scheibe oder in einer Kombination hiervon, zusammenhängend oder getrennt, an der Scheibe unmittelbar anliegt oder angreift. Bei dieser Ausführungsform ist vorgesehen, dass ausschließlich für den an der Außenseite der Scheibe ausgebildeten Sekundärbereich ein Primer oder Haftvermittler zur klebenden Verbindung mit der Scheibe verwendet wird.

Alternativ kann vorgesehen sein, dass das Primärteil an der Innenseite, an der Stirnseite oder an der Außenseite der Scheibe oder in einer beliebigen Kombination hiervon, zusammenhängend oder getrennt, an der Scheibe mittels Primer oder Haftvermittler befestigt ist. In Abhängigkeit der Auswahl der Materialien oder der Einsatzbedingungen kann es erforderlich werden, auch das Primärteil mit einem Primer oder Haftvermittler zur Scheibe zu fixieren.

Des Weiteren ist bevorzugt vorgesehen, dass auf dem Primärteil eine Abdichtung ausgebildet ist, welche zum Einbringen des Sekundärteils eine Kavität im Spritzgusswerkzeug abdichtet, so dass das Sekundärteil das Primärteil nicht vollständig überdeckend umgreift. Durch eine solche Abdichtung kann erzielt werden, dass die Anpressdrücke des Spritzgusswerkezeuges geringer ausgebildet sein können, um dennoch einen sauberen Randabschluss des Sekundärteils zum Primärteil zu ermöglichen. Dadurch werden auch geringere Drücke durch das Spritzgusswerkzeug auf die Scheibe übertragen, so dass die Gefahr von Brüchen verringert ist.

Eine weitere bevorzugte Ausgestaltung der Erfindung sieht vor, dass die Abdichtung als umlaufende Erhebung oder Höcker ausgebildet ist. Dadurch kann eine gleichmäßige Flächenpressung beim Schließen des Spritzgusswerkzeuges erzielt werden, um die Kavität zum Einbringen des Sekundärteils zu schließen.

Bevorzugt ist die Abdichtung auf der Innenseite des Primärteils vorgesehen. Dadurch kann einerseits die Wirkung der Umklammerung des Sekundärteils aufrechterhalten werden und des Weiteren die Anbringung einer solchen Abdichtung am Primärteil im nicht sichtbaren Bereich der Scheibeneinheit vorgesehen sein.

Es hat sich als vorteilhaft erwiesen, dass der Überstand und/oder die Unterschneidung im Bereich zwischen 0,5 und 1,5 mm, vorzugsweise im Bereich von 1,0 mm, liegt.

Die Erfindung sowie weitere vorteilhafte Ausführungsformen und Weiterbildungen derselben werden im Folgenden anhand der in den Zeichnungen dargestellten Beispiele näher beschrieben und erläutert. Die der Beschreibung und den Zeichnungen zu entnehmenden Merkmale können einzeln für sich oder zu mehreren in beliebiger Kombination erfindungsgemäß angewandt werden. Es zeigen:
Figur 1 eine Scheibeneinheit in seitlicher Ansicht auf die am Fahrzeug außen liegende Seite mit einer
   2-K-Umspritzung,
Figur 2 eine Querschnittansicht durch Schnitt I-I der Scheibeneinheit nach Fig. 1 mit einem auf der Außenseite mittels Primer befestigtem Sekundärteil und
Figur 3 eine Querschnittansicht einer alternativen Ausführungsform zu Fig. 2 mit einem auf der Innen- und Außenseite mittels Primer befestigtem Sekundärteil, welches Unterschneidung und Überstand des Primers aufweist.

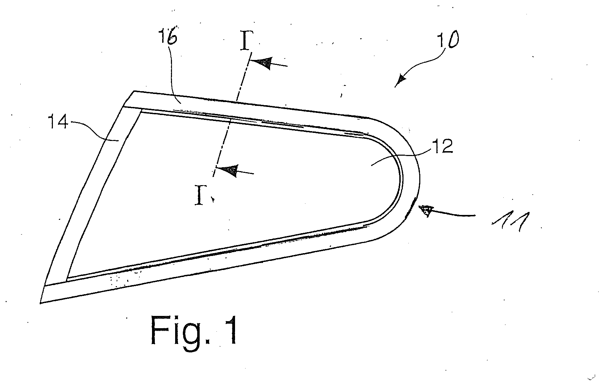

In Figur 1 ist schematisch eine Scheibeneinheit 10 dargestellt, welche eine Scheibe 12 beispielsweise aus einem Glas, insbesondere Silikatglas, oder aus einem Kunststoff, insbesondere Kunstharz oder Polycarbonat, aufweist. An der Scheibe 12 ist ein Rahmen 11 vorgesehen, der gemäß dem Ausführungsbeispiel die Scheibe 12 ringförmig umgibt. Im Ausführungsbeispiel ist der Rahmen 11 zur dreiecksförmigen Scheibe 12 voll umlaufend ausgebildet. Alternativ kann vorgesehen sein, dass die 2-K-Umspritzung 16 die Scheibe 12 nicht vollständig umgibt, also nicht vollständig umlaufend ausgebildet ist, sondern nur einzelne Seitenabschnitte umfasst beziehungsweise sich nur entlang von einzelnen Stirnseiten 13 erstreckt. Eine solche Scheibeneinheit 10 wird im Bereich einer vorgegebenen Öffnung eines nicht näher dargestellten Karosserieteils nach bereits bekannten Techniken eingesetzt und bevorzugt dauerhaft mit dem Karosserieteil verbunden. Diese Scheibeneinheit 10 kann auch Teil einer Baueinheit sein, welche in eine Tür oder in ein sonstiges Karosserieteil eingesetzt wird. Beispielsweise kann die Scheibeneinheit 10 auch einen Fensterführungssteg aufweisen, der einerseits an die feststehende Scheibe 12 angrenzt und gegenüberliegend eine auf und ab bewegbare Scheibe führt. Im Ausführungsbeispiel ist beispielsweise auf einem vertikalen Abschnitt des Rahmens 11 eine Blende oder Zierleiste 14 aufgeklipst oder aufgeklebt. Diese kann auch vollständig an einer Außenseite des Rahmens 11 umlaufend vorgesehen sein.

Der Rahmen 11 weist ein Rahmenprofil auf und den Rand der Scheibe 12, eine Innenseite 31, eine Stirnseite 13 und eine Außenseite 32 umfasst. Dabei greift der Rahmen 11 mit seinem Rahmenprofil aus einer 2- oder Mehrkomponenten-Umspritzung sowohl an der Außenseite 32, der Stirnseite 13 und der Innenseite 31 der Scheibe 12 an.

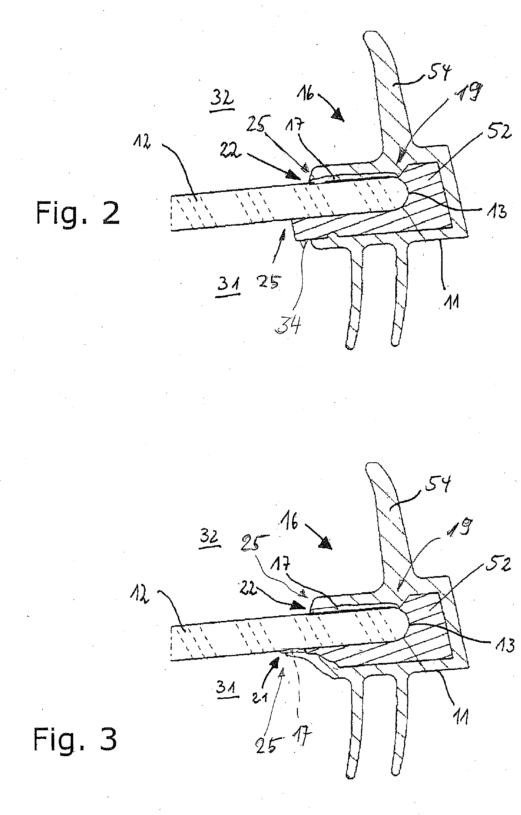

Im Ausführungsbeispiel ist das Primärteil 52 derart ausgebildet, dass dieses an einer Innenseite 31 und der Stirnseite 13 anliegt. Alternativ kann vorgesehen sein, dass dieses Primärteil 52 nur an der Innenseite 31 oder nur an der Stirnseite an der Scheibe 12 anliegt. Das Sekundärteil 54 umgreift das Primärteil 52 in der Gestalt, dass jedenfalls das Sekundärteil 54 mit einem zur Scheibenmitte weisenden Abschnitt unmittelbar an einer Außenseite 32 der Scheibe 12 anliegt und mittels eines Primers 17 oder Haftvermittlers daran befestigt ist. Des Weiteren erstreckt sich das Sekundärteil 54 zumindest abschnittsweise um das Primärteil 52 und erstreckt sich vorzugsweise auch zumindest teilweise auch auf der Innenseite 31 der Scheibe 12, wobei gemäß dem Ausführungsbeispiel in Figur 2 das Primärteil 52 auf der Innenseite 31 nicht vollständig überdeckt ist, sondern vielmehr einen freien Randabschluss 25 des Primärteils 52 gegenüber dem Sekundärteil 54 hervorsteht. Bei dieser Ausführungsform ist vorgesehen, dass das Primärteil 52 unmittelbar an der Scheibe 12 angespritzt ist. Anschließend wird das Sekundärteil 54 in einen verbleibenden Hohlraum der Spritzform mit dem Werkstoff für das Sekundärteil 54 ausgefüllt, so dass das Sekundärteil 54 zum einen an der Außenseite 32 der Scheibe 12 anliegt und sich zum anderen mit dem Primärteil 52 verbindet beziehungsweise in einem gewissen Maße miteinander verschweißt wird.

Zur Herstellung einer solchen Umspritzung kann vor dem Umspritzen des Primärteils 52 ein Primer 17 auf einer Außenseite 32 der Scheibe 12 aufgetragen werden, wobei bevorzugt die Breite des Primerauftrags der an der Außenseite 32 der Scheibe 12 anliegenden Breite des Sekundärteils 54 entspricht. Das Primärteil 52 wird in dieser Ausführungsform ohne Primer 17 zur Scheibe 12 angespritzt. Aufgrund der Verbindung des Sekundärteils 52 mit dem an der Außenseite 32 der Scheibe 12 anliegenden Abschnitt wird eine vollständige Abdichtung der Umspritzung von der Außenseite 32 zur Innenseite 31 der Scheibe 12 erzielt. Aufgrund der zumindest teilweisen Umspritzung des Primärteils 52 durch das Sekundärteil 54 kann eine Fixierung des Primärteils 52 zur Scheibe 12 gegeben sein, so dass auch eine feste Anordnung der Umspritzung im stirnseitigen Bereich und auf der Innenseite 31 zur Scheibe 12 gegeben ist.

Eine weitere bevorzugte Ausführungsform sieht vor, dass die Auftragsbreite des Primers 17 auf die Außenseite 32 der Scheibe 12 derart ausgebildet ist, dass nach dem Umspritzen des Sekundärteils 54 der Randabschluss 25 einen Überstand zum Primer 17 aufweist beziehungsweise dass der Primer 17 mit einer Unterschneidung ausgebildet ist. Eine solche Unterschneidung zum Randabschluss 25 des Sekundärteils kann sich vom vorderen, zur Scheibenmitte weisenden Randabschluss 25 in Richtung auf die Stirnseite 13 der Scheibe 12 erstrecken und beispielsweise zwischen 0,5 mm und 1,5 mm betragen. Dadurch ist sichergestellt, dass eine optisch ansprechende Gestalt erfolgt und der Primer 17 nicht gegenüber der äußersten Kante des Randbereiches 25 hervorragt.

Bei den vorgenannten Ausführungsbeispielen gemäß Figur 2 kann alternativ vorgesehen sein, dass das Primärteil 52 auch durch einen Primer oder Haftvermittler mit der Scheibe 12 verbunden wird.

Des Weiteren kann bei der Ausführungsform gemäß Figur 2 alternativ vorgesehen sein, dass das Primärteil 52 auch einen Bereich an der Außenseite 32 der Scheibe 12 umgibt und daran anliegt und/oder mittels Primer 17 oder Haftvermittler befestigt ist.

Bei der in Figur 2 dargestellten Ausführungsform der Umspritzung 16 ist auf der Innenseite 31 der Scheibe 12 das Sekundärteil 54 gegenüber dem zur Scheibenmitte weisenden Randabschluss des Primärteils 52 zurückversetzt. Sofern zwischen dem Primärteil 52 und der Scheibe 12 ein Primer oder Haftvermittler aufgetragen wird, kann dieser ebenso mit einer Unterschneidung, aber auch mit einem Überstand, ausgebildet sein, da der Überstand auf der Innenseite optisch nicht störend ist, um ein vollständiges Anhaften des Primärteils mit der Innenseite 31 der Scheibe 12 zu erzielen.

Nach einer bevorzugten Ausführungsform kann gemäß Figur 2 vorgesehen sein, dass das Primärteil 52 auf der Innenseite 31 der Scheibe 12 eine Abdichtung 34 aufweist. Diese Abdichtung 34 kann als Erhebung ausgebildet sein und bspw. als umlaufende Wulst oder als dreiecksförmige Höcker ausgebildet werden. Diese Abdichtung 34 erstreckt sich bevorzugt entlang des Randbereiches der Scheibe 12 entlang der Ausbildung des Primärteils 52. Diese Abdichtung 34 dient gleichzeitig als Begrenzung zur Überdeckung des Primärteils 52 durch das Sekundärteil 54. Durch eine solche Abdichtung 34 kann eine erleichterte Abdichtung der Kavität im Spritzgusswerkzeug vorgesehen sein, welche zur Ausbildung des Sekundärteils 54 vorgesehen ist. Dadurch können auch die Schließkräfte bzw. die Anpressdrücke der Formhälften des Spritzgusswerkzeuges reduziert werden und dennoch eine sichere Abdichtung aufrechterhalten bleiben.

Des Weiteren kann alternativ vorgesehen sein, dass das Sekundärteil 52 nur an der Außenseite 32 der Scheibe 12 und an nur einer Seite das Primärteil 12 überdeckend ausgebildet ist.

Das Primärteil 52 kann darüber hinaus mit Befestigungselementen 18 versehen sein, wie beispielsweise Haken oder Rastverbindungselementen, welche zur Befestigung der Scheibe 12 an der Karosserie oder weiteren mit der Karosserie verbundenen Teilen ausgebildet sind.

Figur 3 stellt eine alternative Ausführungsform dar, bei welcher das Sekundärteil 54 das Primärteil 52 auch auf der Innenseite 31 der Scheibe 12 vollständig überdeckt. Das Sekundärteil 54 kann dabei ohne Einsatz von einem Primer 17 oder Haftvermittler an der Innenseite 31 der Scheibe anliegen. Dies ist insbesondere dann vorgesehen, wenn das Primärteil 52 ohne Primer 17 oder Haftvermittler an die Scheibe 12 angespritzt wurde. Diese Anordnung kann auch dann vorgesehen sein, wenn das Primärteil 52 mit Primer zur Scheibe 12 befestigt ist. Alternativ kann auch vorgesehen sein, dass dieser auf der Innenseite 31 anliegende Abschnitt des Sekundärteils 54 mit einem Primer 17 (strichliniert) an der Scheibe 12 befestigt ist in Analogie zur Außenseite 32. Im Übrigen gelten für diese Ausführungsformen die analogen alternativen Varianten, welche zu Figur 2 beschrieben worden sind.

Bei der 2-K-Umspritzung ist das Primärteil 52 als Hartkomponente ausgebildet, dessen Formfestigkeit größer ist als diejenige des als Weichkomponente ausgebildeten Sekundärteils 54. Als Materialien für die Umspritzung 16 werden beispielsweise als Hartkomponente für das Primärteil 52 und als Weichkomponente für das Sekundärteil 54 Materialien ausgewählt, welche beispielhaft in der EP 0 857 116 B1 beschrieben sind. Als Primer können handelsübliche Stoffe eingesetzt werden. Alternativ zur 2-K-Umspritzung kann auch eine Mehrkomponenten-Umspritzung vorgesehen sein, bei der zumindest eine Weichkomponente unmittelbar im Randbereich 19 der Scheibe 12 an deren Außenseite 32 unmittelbar mit Primer 17 oder Haftvermittler angreift und befestigt ist.

Die erfindungsgemäßen Ausführungsformen haben den Vorteil, dass die Außenseite 32 durch die Verwendung des Primers 17 dicht gestaltet werden kann. Es entfallen somit bei der Herstellung zwei Dichtigkeitstests zur Prüfung der Dichtigkeit. Darüber hinaus hat die erfindungsgemäße Ausführungsform den Vorteil, dass keine Einfallstellen entstehen, welche Undichtigkeiten erzeugen könnten, da es auch möglich bleibt, den Primärteil 52 einseitig anzuspritzen.

## Patentansprüche

1. Scheibeneinheit (51) für Fenster an Kraftfahrzeugen,
- mit einer Scheibe (12),
- mit einem Rahmen (11), der ein Rahmenprofil aufweist und den Rand der Scheibe (12), eine Innenseite (31), eine Stirnseite (13) und eine Außenseite (32) umfasst, wobei der Rahmen (11) an wenigstens zwei umlaufenden Stirnseiten (13) der Scheibe (12) angreift oder die Scheibe (12) ringförmig in sich geschlossen umgibt, und
- der Rahmen (11) aus zwei Profilteilen (52, 54) mit einem Primärteil (52) und einem Sekundärteil (54) ausgebildet ist und
- das Primärteil (52) als Hartkomponente ausgebildet ist, dessen Formfestigkeit größer als diejenige des als Weichkomponente ausgebildeten Sekundärteils (54) ist,
**dadurch gekennzeichnet,**
- **dass** das Primärteil (52) nur an der Innenseite (31), oder nur an der Stirnseite (13), oder nur an der Innenseite (31) und der Stirnseite (13) an den Randbereich der Scheibe (12) angespritzt ist und
- **dass** das Sekundärteil (54) das Primärteil (52) zumindest teilweise umgibt und auf der Außenseite (32) der Scheibe (12) direkt an der Scheibe (12) anliegt und mit einem Primer (17) oder Haftvermittler an der Scheibe (12) befestigt ist.

2. Scheibeneinheit nach Anspruch 1, **dadurch gekennzeichnet, dass** das Primärteil (52) sich auf einer Innenseite (31) der Scheibe (12) erstreckt und das Sekundärteil (54) das Primärteil (52) auf der Innenseite (31) der Scheibe (12) zumindest teilweise umgibt.

3. Scheibeneinheit nach Anspruch 2, **dadurch gekennzeichnet, dass** das auf der Innenseite (31) der Scheibe (12) angeordnete und das Primärteil (52) überdeckende Sekundärteil (54) sich nicht bis zur Innenseite (31) der Scheibe (12) erstreckt und nicht anliegt.

4. Scheibeneinheit nach Anspruch 1, **dadurch gekennzeichnet, dass** das Sekundärteil (54) auf der Innenseite (31) der Scheibe (12) das Primärteil (52) überdeckt und unmittelbar an der Scheibe (12) anliegt.

5. Scheibeneinheit nach Anspruch 4, **dadurch gekennzeichnet, dass** das auf der Innenseite (31) der Scheibe (12) anliegende Sekundärteil (54) zumindest teilweise mit einem Primer (17) oder Haftvermittler an der Scheibe (12) befestigt ist.

6. Scheibeneinheit nach Anspruch 1, **dadurch gekennzeichnet, dass** im Randbereich (19) der Scheibe (12) an deren Außenseite (32) eine Auftragsbreite des Primers (17) oder Haftvermittlers im Verhältnis zu dem den Randbereich (25) an der Außenseite (32) überdeckenden Sekundärteil (54) derart erfolgt, dass der Primer (17) oder Haftvermittler der Breite des Randbereiches (25) entspricht oder eine Unterschneidung zum zur Scheibenmitte ragenden Randabschluss (25) des Sekundärteils (54) aufweist.

7. Scheibeneinheit nach Anspruch 1, **dadurch gekennzeichnet, dass** im Randbereich (19) an der Scheibe (12) an deren Innenseite (31) eine Auftragsbreite des Primers (17) oder Haftvermittlers im Verhältnis zu dem den Randbereich an der Innenseite (31) überdeckenden Primärteils (52) derart erfolgt, dass der Primer (17) oder Haftvermittler eine Überdeckung des Primärteils (52) zur Scheibe (12) aufweisende Auftragsbreite oder einen Überstand über den Randabschluss (25) des Primärteils (52) hinaus aufweist.

8. Scheibeneinheit nach Anspruch 1, **dadurch gekennzeichnet, dass** das Primärteil (52) im Randbereich (19) der Scheibe (12) an der Innenseite (31), an der Stirnseite (13) oder an der Außenseite (32) der Scheibe (12) oder in einer Kombination hiervon, zusammenhängend oder getrennt, an der Scheibe (12) unmittelbar anliegt oder angreift.

9. Scheibeneinheit nach Anspruch 1, **dadurch gekennzeichnet, dass** das Primärteil (52) im Randbereich (19) der Scheibe (12) an der Innenseite (31), an der Stirnseite (13) oder an der Außenseite (32) der Scheibe (12) oder in einer Kombination hiervon, zusammenhängend oder getrennt, an der Scheibe (12) mittels Primers (17) oder Haftvermittler befestigt ist.

10. Scheibeneinheit nach Anspruch 1, **dadurch gekennzeichnet, dass** auf dem Primärteil (52) eine Abdichtung (34) ausgebildet ist, welche zum Einbringen des Sekundärteils (54) eine Kavität im Spritzgusswerkzeug abdichtet, so dass das Sekundärteil (54) das Primärteil (52) nicht vollständig überdeckend umgreift.

11. Scheibeneinheit nach Anspruch 10, **dadurch gekennzeichnet, dass** die Abdichtung (34) als Erhebung oder Höcker ausgebildet ist, welche sich entlang des Primärteils (52) im Randbereich der Scheibe (12) umlaufend erstreckt.

12. Scheibeneinheit nach Anspruch 10, **dadurch gekennzeichnet, dass** die Abdichtung (34) auf der Innenseite (31) des Primärteils (52) ausgebildet ist.

13. Scheibeneinheit nach einem der Ansprüche 7 oder 8, **dadurch gekennzeichnet, dass** der Überstand (21) und/oder die Unterschneidung (22) im Bereich zwischen 0,5 mm und 1,5 mm, vorzugsweise im Bereich von 1,0 mm, liegt.

## Claims

1. Window unit (51) for windows of motor vehicles,
- having a window (12)
- with a frame (11) which has a frame profile and encompasses the edge of the window (12), an inside (31), a face side (13) and an outside (32), wherein the frame (11) grips the window (12) or encompasses the window (12) on at least two peripheral face sides (13) in the form of a ring which is enclosed in itself, and
- the frame (11) is formed from two profile parts (52, 54) having a primary part (52) and a secondary part (54), and the primary part (52) is in the form of a hard component, the dimensional stability of which is greater than that of the secondary part (54) which is in the form of a soft component, **characterised in that**
- the primary part (52) is moulded onto the edge region of the window (12) only on the inside (31) or only on the face side (13) or only on the inside (31) and the face side (13), and
- the secondary part (54) at least partially encompasses the primary part (52) and rests directly on the window (12) on the outside (32) of the window (12) and is fixed to the window (12) by means of a primer (17) or of a bonding agent.

2. Window unit according to Claim 1, **characterised in that** the primary part (52) extends on an inner side (31) of the window (12) and the secondary part (54) at least partially encompasses the primary part (52) on the inside (31) of the window (12).

3. Window unit according to Claim 2, **characterised in that** the secondary part (54) which is arranged on the inside (31) of the window (12) and covers the primary part (52) does not extend to and does not rest on the inside (31) of the window (12).

4. Window unit according to Claim 1, **characterised in that** the secondary part (54) covers the primary part (52) on the inside (31) of the window (12) and rests directly against the window (12).

5. Window unit according to Claim 4, **characterised in that** the secondary part (54) which rests on the inside (31) of the window (12) is at least partially fixed to the window (12) by means of a primer (17) or bonding agent.

6. Window unit according to Claim 1, **characterised in that** an application width of the primer (17) or bonding agent in the edge region (19) of the window (12) on its outside (32) compared with the secondary part (54) which covers the edge region (25) on the outside (32) is such that the primer (17) or bonding agent corresponds to the width of the edge region (25) or has an undercut with respect to the edge termination (25) of the secondary part (54) which projects towards the centre of the window.

7. Window unit according to Claim 1, **characterised in that** an application width of the primer (17) or bonding agent in the edge region (19) of the window (12) on its inside (31) compared with the primary part (52) which covers the edge region on the inside (31) is such that the primer (17) or bonding agent has an application width corresponding to the covering of the window (12) by the primary part (52) or a protrusion beyond the edge termination (25) of the primary part (52).

8. Window unit according to Claim 1, **characterised in that**, in the edge region (19) of the window (12), the primary part(52)rests directly on or grips the window (12) on the inside (31), on the face side (13) or on the outside (32) of the window (12) or in a combination thereof, collectively or separately.

9. Window unit according to Claim 1, **characterised in that**, in the edge region (19) of the window (12), the primary part (52) is fixed to the window (12) by means of primer (17) or bonding agent on the inside (31), on the face side (13) or on the outside (32) of the window (12) or in a combination thereof, collectively or separately.

10. Window element according to Claim 1, **characterised in that** a seal (34), which, in order to fit the secondary part (54), seals a cavity in the injection moulding tool so that the secondary part (54) does not completely encompass and cover the primary part (52) is formed on the primary part (52).

11. Window unit according to Claim 10, **characterised in that** the seal (34) is in the form of an elevation or hump which extends peripherally along the primary part (52) in the edge region of the window (12).

12. Window unit according to Claim 10, **characterised in that** the seal (34) is formed on the inside (31) of the primary part (52).

13. Window unit (51) according to one of Claims 7 or 8, **characterised in that** the protrusion (21) and/or undercut (22) lies in the range between 0.5 mm and 1.5 mm, preferably in the region of 1. 0 mm.

## Revendications

1. Module de vitrage (51) pour fenêtre de voitures automobiles,
- avec une vitre (12),
- avec un cadre (11) qui présente un profilé de cadre et enserre le bord de la vitre (12), une face intérieure (31), une face frontale (13) et une face extérieure (32), le cadre (11) appuyant contre au moins deux faces frontales (13) circonférentielles de la vitre (12) ou entourant la vitre (12) tel un anneau, de manière fermée en soi, et
- le cadre (11) étant formé par deux parties de profilé (52, 54), à savoir une partie primaire (52) et une partie secondaire (54), et
- la partie primaire (52) étant formée en tant que composant dur dont la stabilité de forme est supérieure à celle de la partie secondaire (54) formée en tant que composant souple,
**caractérisé en ce que**
- la partie primaire (52) est formée par moulage par injection sur la zone périphérique de la vitre (12), et ce uniquement sur la face intérieure (31), ou uniquement sur la face frontale (13), ou uniquement sur la face intérieure (31) et la face frontale (13), et
- la partie secondaire (54) entoure au moins partiellement la partie primaire (52) et repose directement contre la vitre (12), sur la face extérieure (32) de ladite vitre (12), et est fixée à la vitre (12) à l'aide d'un primaire (17) ou agent adhésif.

2. Module de vitrage selon la revendication 1, **caractérisé en ce que** la partie primaire (52) s'étend sur une face intérieure (31) de la vitre (12) et que la partie secondaire (54) entoure au moins partiellement la partie primaire (52) sur la face intérieure (31) de la vitre (12).

3. Module de vitrage selon la revendication 2, **caractérisé en ce que** la partie secondaire (54) disposée sur la face intérieure (31) de la vitre (12) et recouvrant la partie primaire (52) ne s'étend pas jusqu'à la face intérieure (31) de la vitre (12) et ne repose pas contre elle.

4. Module de vitrage selon la revendication 1, **caractérisé en ce que** la partie secondaire (54) recouvre la partie primaire (52) sur la face intérieure (31) de la vitre (12) et repose directement contre la vitre (12).

5. Module de vitrage selon la revendication 4, **caractérisé en ce que** la partie secondaire (54) reposant contre la face intérieure (31) de la vitre (12) est fixée au moins partiellement à la vitre (12) à l'aide d'un primaire (17) ou agent adhésif.

6. Module de vitrage selon la revendication 1, **caractérisé en ce que** l'application du primaire (17) ou agent adhésif est effectuée dans la zone périphérique (19) de la vitre (12), sur la face extérieure (32) de celle-ci, selon une largeur qui est proportionnelle à celle de la partie secondaire (54) recouvrant la zone périphérique (25) sur face extérieure (32), et ce de telle sorte que le primaire (17) ou agent adhésif correspond à la largeur de la zone périphérique (25) ou présente un retrait par rapport au raccord périphérique (25) de la partie secondaire (54) lequel fait saillie vers le milieu de la vitre.

7. Module de vitrage selon la revendication 1, **caractérisé en ce que** l'application du primaire (17) ou agent adhésif est effectuée dans la zone périphérique (19) de la vitre (12), sur la face intérieure (31) de celle-ci, selon une largeur qui est proportionnelle à celle de la partie primaire (52) recouvrant la zone périphérique sur la face intérieure (31), et ce de telle sorte que le primaire (17) ou agent adhésif présente une largeur d'application qui recouvre la partie primaire (52) tournée vers la vitre (12) ou qui fait saillie par rapport au raccord périphérique (25) de ladite partie primaire (52).

8. Module de vitrage selon la revendication 1, **caractérisé en ce que** la partie primaire (52) dans la zone périphérique (19) de la vitre (12) repose ou appuie directement contre la vitre (12), et ce contre la face intérieure (31), contre la face frontale (13) ou contre la face extérieure (32) de la vitre (12) ou, de façon continue ou séparée, selon une combinaison desdites possibilités.

9. Module de vitrage selon la revendication 1, **caractérisé en ce que** la partie primaire (52) dans la zone périphérique (19) de la vitre (12) est fixée sur la vitre (12) à l'aide d'un primaire (17) ou d'un agent adhésif, et ce sur la face intérieure (31), sur la face frontale (13) ou sur la face extérieure (32) de la vitre (12) ou, de façon continue ou séparée, selon une combinaison desdites possibilités.

10. Module de vitrage selon la revendication 1, **caractérisé en ce que** sur la partie primaire (52) est formé un joint d'étanchéité (34) qui, en vue de la pose de la partie secondaire (34), rend étanche une cavité ménagée dans l'outil de moulage par injection de telle sorte que la partie secondaire (54) enserre la partie primaire (52) sans la recouvrir complètement.

11. Module de vitrage selon la revendication 10, **caractérisé en ce que** le joint d'étanchéité (34) est réalisé sous forme d'élévation ou de bosse qui s'étend sur le pourtour de la partie primaire (52) dans la zone périphérique de la vitre (12).

12. Module de vitrage selon la revendication 10, **caractérisé en ce que** le joint d'étanchéité (34) est formé sur la face intérieure (31) de la partie primaire (52).

13. Module de vitrage selon l'une des revendications 7 ou 8, **caractérisé en ce que** la saillie (21) et/ou le retrait (22) se situe(nt) dans une plage comprise entre 0,5 mm et 1,5 mm, de préférence à environ 1,0 mm.
